Europäisches Patentamt

European Patent Office

Office européen des brevets

(19)

(11) Numéro de publication: **0 392 938**
**A1**

# DEMANDE DE BREVET EUROPEEN

(12)

(21) Numéro de dépôt: 90420163.9

(22) Date de dépôt: 02.04.90

(51) Int. Cl.⁵: **B61B 12/06, B61H 9/02**

(30) Priorité: **10.04.89 FR 8904788**

(43) Date de publication de la demande:
**17.10.90 Bulletin 90/42**

(84) Etats contractants désignés:
**AT CH DE GB IT LI SE**

(71) Demandeur: **POMAGALSKI S.A.**
**11, rue René Camphin**
**F-38600 Fontaine(FR)**

(72) Inventeur: **Huard, Jean-Paul**
**Route du Grand Vignole, Lesvigne Brouillet**
**F-74320 Sevrier(FR)**
Inventeur: **Vichier-Guerre, Jean-Pierre**
**Collège La Garenne - BP 109**
**F-38503 Voiron(FR)**

(74) Mandataire: **Kern, Paul**
**206, Cours de la Libération**
**F-38100 Grenoble(FR)**

(54) **Dispositif de freinage de sécurité d'un funiculaire.**

(57) Chaque véhicule (16) d'un funiculaire est équipé de plusieurs freins de voie (18) pour un freinage de secours. Le nombre de freins est sélectionné par un automate (52) embarqué, en fonction de la position du véhicule sur la voie et éventuellement de sa charge, de manière à éviter toute décélération excessive.

fig 1

## DISPOSITIF DE FREINAGE DE SECURITE D'UN FUNICULAIRE.

L'invention est relative à un dispositif de freinage de secours embarqué sur un véhicule, notamment d'un funiculaire, comprenant un détecteur d'incident, notamment de rupture de câble, de survitesse et d'anti-retour, pour déclencher le freinage de secours du véhicule et une pluralité de freins sollicités en position de freinage et maintenus en position armée, prêts au freinage, par des accrochages commandés individuellement pour permettre une modulation du freinage en cas d'incident par une commande sélective du nombre de freins mis en action.

La sécurité de fonctionnement des freins de secours, en l'occurrence des freins de voie du véhicule, implique l'emploi de freins d'une structure simple n'ayant que deux positions, une position de freinage et une position desserrée. Chaque frein comporte une pince pouvant enserrer le rail de la voie sous l'action d'un ressort mécanique, tel qu'un empilage de rondelles élastiques, dites de Belleville. La force de ce frein est déterminée par le ressort et elle n'est pas adaptable ou réglable, alors qu'il est évident que l'arrêt d'un véhicule chargé sur une voie en forte déclivité nécessite une force de freinage notablement supérieure à celle pour l'arrêt d'un véhicule vide sur un tronçon plat. Un freinage trop important risque de provoquer une décélération excessive et un arrêt brutal du véhicule peut engendrer des accidents graves. Pour pallier cet inconvénient il a déjà été proposé d'étager le nombre de freins qui sont actionnés en employant un présélecteur piloté par la tension du câble tracteur du véhicule. Cette tension équivaut, en fonctionnement normal, à la force de gravité qui agit sur le véhicule et qui doit être compensée par les forces de freinage pour arrêter le véhicule, mais l'indication n'est pas fiable et sûre. L'information est faussée par les effets d'inertie et/ou les battements du câble et dans le cas extrême d'un véhicule roulant sur un tronçon plat la force de traction peut être nulle et mettre hors d'action le système de freinage de sécurité. Le système n'est pas sécurisé et n'est pas à l'abri d'une panne dormante.

La présente invention a pour but de permettre la réalisation d'un dispositif de freinage de sécurité, sûr, évitant toute décélération excessive du véhicule.

Le dispositif de freinage selon l'invention est caractérisé en ce que les commandes des accrochages des freins sont pilotées d'une part par ledit détecteur d'incident et d'autre part par un automate, recevant un signal de position, représentatif de la position du véhicule sur la pente de la voie et émettant un signal de sélection, lors d'un incident, d'un nombre de freins déterminé par la position du véhicule au moment de l'incident pour adapter la décélération aux conditions du moment et éviter des décélérations excessives du véhicule.

L'invention est basée sur la constatation que la pente de la voie est généralement très variable et que cette variation est prédominante pour la détermination du nombre de freins à actionner. L'autre facteur important, en l'occurrence le poids du véhicule varie moins, de 1 à 2 au maximum, et peut parfois être négligé. Le profil de la voie est bien connu et lors de l'installation du funiculaire il est mémorisé dans l'automate, qui connaît ainsi pour chaque position du véhicule la pente de la voie à cet emplacement et détermine ainsi le nombre de freins à actionner pour arrêter le véhicule sans décélération excessive. Il est à noter que ce nombre peut être déterminé une fois pour toutes lors de l'installation et être introduit dans une table dans laquelle l'automate sélectionne en fonction de la position du véhicule le nombre de freins à actionner. L'automate est capable de moduler le freinage selon d'autres facteurs telles que la trajectoire de la voie ou la proximité d'une station ou d'un tronçon d'évitement. Dans ces zones, la décélération imposée est souvent différente.

La sécurité de fonctionnement est assurée par un doublement du système de détection de la position du véhicule et de l'automate d'une manière bien connue des spécialistes.

Selon un développement important de l'invention, l'automate prend en compte le poids du véhicule, cette information étant fournie, soit par comptage des passagers embarqués soit par tout système de pesage approprié. Cette donnée est mémorisée à chaque début de trajet du véhicule et intégrée par l'automate pour la sélection du nombre de freins.

L'intervention de l'automate temporise légèrement la transmission de l'ordre de freinage et cette temporisation, toujours néfaste, peut dans certains cas être dangereuse. Pour pallier cet inconvénient un nombre minimal de freins, qui ne peut en aucun cas engendrer une décélération néfaste, est mis en action directement par le détecteur d'incident sans l'intervention de l'automate, ce dernier gérant le freinage complémentaire.

L'indicateur de position du véhicule comporte un générateur d'impulsions commandé par le déplacement du véhicule, par exemple par la rotation des roues, avec une remise à zéro en fin de parcours, d'autres systèmes étant utilisables, notamment des détecteurs de passage ou un intégrateur piloté par la génératrice tachymétrique généralement associée à chaque véhicule.

L'automate peut être électronique à microprocesseur ou éventuellement pneumatique, de tels processeurs étant bien connus des spécialistes. Le microprocesseur embarqué est capable d'effectuer d'autres tâches, notament d'alarme ou de contrôle, et participer à la détection d'incidents. Selon une caractéristique de l'invention, le microprocessur vérifie si la décélération du véhicule reste dans des limites acceptables, en particulier si elle n'est pas trop faible pour certaines positions du véhicule, et il déclenche le cas échéant des actions complémentaires de freinage. La décélération ou l'accélération peut être déduite du signal de vitesse fourni par la dynamo tachymétrique et les limites acceptables sont introduites dans la mémoire lors de l'installation.

Les freins sont de préférence du type à pinces enserrant le rail et équipées d'un empilage de rondelles élastiques, dont la sécurité de fonctionnement est bien connue, mais d'autres freins sont utilisables. Un accrochage mécanique ou hydraulique maintient les pinces desserrées et la libération de cet accrochage peut être commandée par des électrovannes.

D'autres avantages et caractéristiques de l'invention ressortiront plus clairement de la description qui va suivre d'un mode de mise en oeuvre de l'invention, donné à titre d'exemple non limitatif et représenté aux dessins annexés, dans lesquels:

    - la figure 1 est une vue schématique d'un tronçon de funiculaire équipé d'un dispositif de freinage selon l'invention;

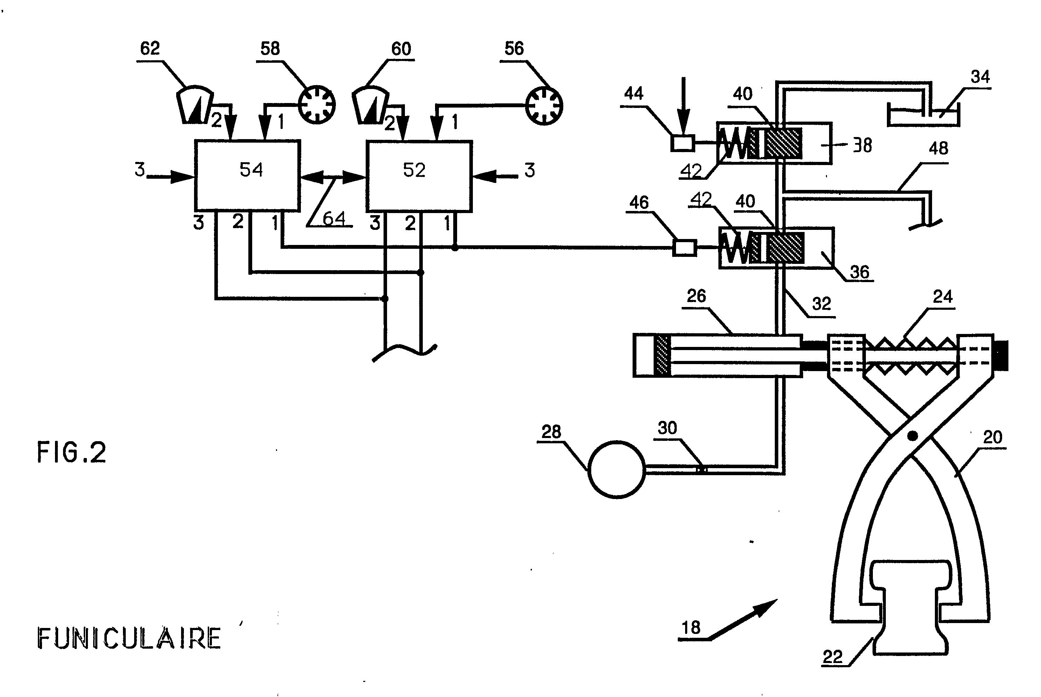

    - la figure 2 illustre la commande du dispositif de freinage;

    - la figure 3 illustre un mode de répartition du freinage sur un train à deux véhicules accouplés.

Sur les figures, un câble tracteur 10 d'un funiculaire s'étend en boucle fermée entre deux stations, dont l'une 12 est motrice. Le câble est relié à deux véhicules 16 qui circulent en va et vient sur une voie ferrée 14 ayant au milieu un tronçon d'évitement. Chaque véhicule 16 est équipé de plusieurs freins 18 de sécurité capables d'immobiliser le véhicule 16 sur la voie 14 en cas d'incident, par exemple lors d'une rupture du câble 10. Le frein 18 en forme de pince 20 enserre en position de freinage le rail 22 de la voie 14 sous l'action d'un ressort 24 constitué par un empilage de rondelles élastiques, dites de Belleville. Le frein 18 est maintenu en position desserrée, à l'encontre de la force du ressort 24, par un accrochage constitué par un vérin hydraulique 26 agissant sur la pince 20. Le vérin 26 est relié d'une part à un accumulateur 28 par l'intermédiaire d'un orifice limité 30 et d'autre part par une conduite de décharge 32 à une bâche 34. Dans la conduite de décharge 32 sont intercalés en série un présélecteur 36 et une commande 38 de déclenchement du freinage de secours, chacun constitué par un tiroir 40 ayant une position d'obturation de la conduite 32 et une position d'ouverture de la conduite 32. Un ressort 42 sollicite le tiroir 40 en position d'ouverture de la conduite 32 correspondant à la décharge du vérin 26 et à un serrage du frein de voie 18. La commande de déclenchement 38 comporte un électro-aimant 44 et le présélecteur 36 un électro-aimant 46 de déplacement du tiroir 40 correspondant, à l'encontre du ressort 42. L'excitation de l'un quelconque des électro-aimants 44, 46 provoque l'obturation de la conduite 32 et le desserrage du frein 18. Le serrage du frein 18 nécessite la désexcitation des deux électro-aimants 44, 46 pour l'ouverture de la conduite 32 et la mise à la bâche 34 du vérin 26. Deux vérins 26 ou un plus grand nombre peuvent être raccordés au même présélecteur 36, pour commander simultanément deux freins 18, un frein pour chacun des rails 22. La commande 38 de déclenchement du freinage peut être commune à l'ensemble des freins 18 du véhicule 16, en prévoyant des conduites dérivées 48 qui relient cette commande à d'autres présélecteurs 36 et en disposant la commande 38 entre les présélecteurs 36 et la bâche 34. D'autres combinaisons sont concevables, le même électroaimant 44, 46 actionnant par exemple simultanément plusieurs tiroirs 40 ou chaque frein 18 ayant sa commande autonome, la présélection et le déclenchement étant pilotés électriquement par l'émission de signaux électriques.

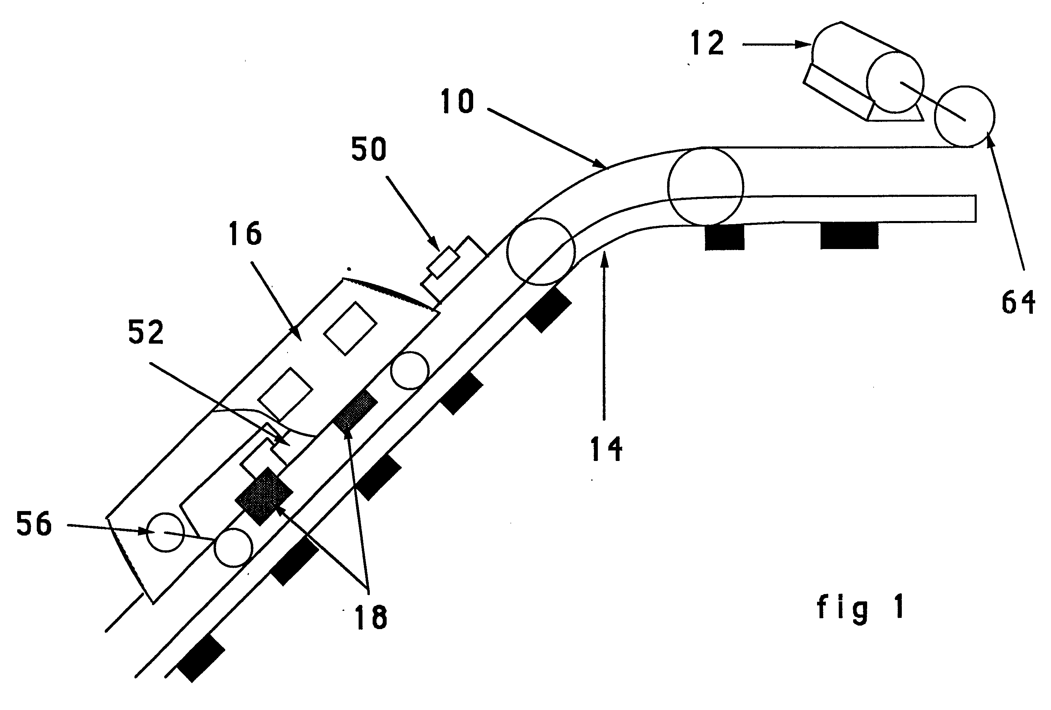

L'électro-aimant 44 de déclenchement du freinage de secours est relié à un détecteur d'incident 50, schématiquement représenté sur la figure 1 à titre d'exemple comme détecteur de la rupture de l'ancrage du câble tracteur 10 au véhicule 16. Ce détecteur 50 peut être une barrette brisable disposée en parallèle de l'ancrage pour se rompre lors d'une rupture de la liaison entre câble et véhicule. Il est clair que le véhicule 16 est équipé d'autres détecteurs d'incident imposés par les normes ou conditions de sécurité, notamment un détecteur de survitesse, de changement de sens de marche, de rupture du câble, chacun étant agencé pour désexciter l'électro-aimant 44 lors d'un incident.

L'électro-aimant 46 du présélecteur 36 est relié à la sortie 1 d'un premier automate 52 et à la sortie 1 d'un deuxième automate 54 pour être commandé par l'un quelconque des deux automates 52, 54. D'une manière analogue, les sorties 2 des automates 52, 54 sont reliées à un présélecteur 36 d'un autre frein de secours du véhicule 16 ainsi que les sorties 3 ou les autres sorties non représentées. Les automates 52, 54, qui sont identiques, comportent chacun une unité centrale, notamment à microprocesseur avec une mémoire, mais d'autres types de processeurs, notamment hydrauliques ou pneumatiques sont utilisables. L'entrée 1 de l'automate 52 est reliée à un générateur d'impulsions 56 accouplé à l'un des essieus du véhicule 16, l'entrée 1 de l'automate 54 étant reliée de la même manière à un générateur d'impulsions 58. Les générateurs 56, 58 fournissent aux automates 52, 54 des signaux représentatifs de la position du véhicule 16 sur la voie 14. Les entrées 2 des automates 52, 54 sont reliées à des dispositifs de pesée 60, 62 indiquant le poids du véhicule 16. Ces dispositifs de pesée 60, 62 peuvent être des jauges de contrainte ou tout autre système approprié ou de simples compteurs des passagers embarqués fournissant aux automates 52, 54 des signaux représentatifs du poids du véhicule 16. Les automates 52, 54 ainsi que les capteurs de position 56, 58 et de poids 60, 62 sont dédoublés pour des raisons de sécurité. Chaque automate 52, 54 comporte des mémoires et des affichages pour l'entrée et le stockage des paramètres du funiculaire, en particulier de la pente de la voie 14 aux différents emplacements.

Le dispositif de freinage de secours fonctionne de la manière suivante:

En fonctionnement normal, tous les freins 18 du véhicule 16 sont desserrés, le déplacement du véhicule sur la voie étant commandé par le treuil 64 situé dans la station motrice 12. Lors d'un incident, par exemple de la rupture de l'attache du câble 10, le détecteur d'incident 50 provoque la désexcitation de l'électroaimant 44 de la commande de déclenchement 38. Le tiroir 40 de cette commande vient sous l'action du ressort 42 dans la position d'ouverture de la conduite de décharge 32 pour actionner ou non le frein 18 selon la position du présélecteur 36 commandé de la manière suivante par les automates 52, 54. Le fonctionnement des deux automates étant le même seul celui de l'automate 52 est décrit ci-après. Au cours du déplacement du véhicule 16 le générateur d'impulsions 56 indique à l'automate 52 la position exacte du véhicule qui en déduit par interrogation de la mémoire ou d'une table la pente de la voie 14 et le nombre de freins 18 devant être sélectionnés pour arrêter le véhicule 16 sans décélération excessive. L'automate 52 émet des signaux de présélection sur l'une ou sur plusieurs sorties 1, 2 ou 3 pour sélectionner un ou plusieurs freins 18 ou groupes de freins 18 par désexcitation de l'électro-aimant 46 et d'ouverture de la conduite de décharge 32 du frein correspondant. Lors d'un incident tous les freins de secours présélectionnés sont actionnés.

Selon les caractéristiques du funiculaire une modulation du freinage de secours en fonction de la pente est suffisante, mais le système peut être perfectionné en tenant compte d'autres facteurs susceptibles d'influencer le déplacement et la décélération du véhicule, en particulier son poids, ce perfectionnement étant dans certaines installations indispensable pour atteindre le but précité.

L'automate 52 reçoît sur l'entrée 2 un signal représentatif de la charge embarquée et il en déduit le poids total du véhicule. L'automate peut alors calculer la force de freinage et le nombre de freins 18 à actionner pour arrêter le véhicule 16, sachant que la force F tendant à déplacer le véhicule le long de la voie est donnée par la formule: $F = Mg \sin \alpha$, M étant la masse du véhicule, g l'accélération de la pesanteur et $\alpha$ l'angle de la pente de la voie. Ces données peuvent être mémorisées ou introduites dans une table, lors du montage du funiculaire, pour permettre à l'automate de sélectionner le nombre de freins en fonction de la position du véhicule 16 et de sa charge par une simple interrogation.

Il est facile de voir que la structure des freins de secours 18 et le dédoublement de leur commande constitue un système sûr. Une liaison 64 entre les deux automates 52, 54 détecte toute différence de fonctionnement qui est signalée par tout moyen approprié.

Chaque véhicule 16 comporte son dispositif de freinage de secours embarqué, mais dans le cas d'un train de véhicules 16 accouplés, par exemple de deux véhicules attelés l'un à l'autre, les freins de secours sont avantageusement répartis sur les deux véhicules, leur commande étant commune et embarquée sur l'un des vehicules.

Les automates 52, 54 peuvent assurer d'autres fonctions, notamment de contrôle de fermeture des portes, de desserrage des freins, de surveillance de la vitesse et/ou de la décélération. L'entrée 3 de l'automate est par exemple reliée à la génératrice tachymétrique (non représentée) dont le véhicule 16 est équipé. L'automate en déduit les accélérations et décélérations du véhicule et vérifie que les vitesses, accélérations et/ou décélérations restent dans des limites prédéterminées mémorisées, en fonction de la position du véhicule, notamment à proximité d'une station ou du tronçon d'évitement. Il surveille ainsi le freinage de secours et peut sélectionner des freins additionnels si la décélération est insuffisante.

Il est toujours nécessaire de sélectionner un nombre minimal de freins de secours pour arrêter le véhicule en cas d'incident, quelle que soit la position et/ou la charge du véhicule. La présélection par les automates 52, 54 introduit un léger retard au freinage et selon l'invention certains freins de secours 18 sont démunis de présélecteur 36 et sont directement reliés à la commande de déclenchement 38 afin d'éviter toute temporisation. Ce nombre de freins dépend bien entendu des caractéristiques de l'installation et dans ce cas les automates 52, 54 ne gèrent que le freinage complémentaire.

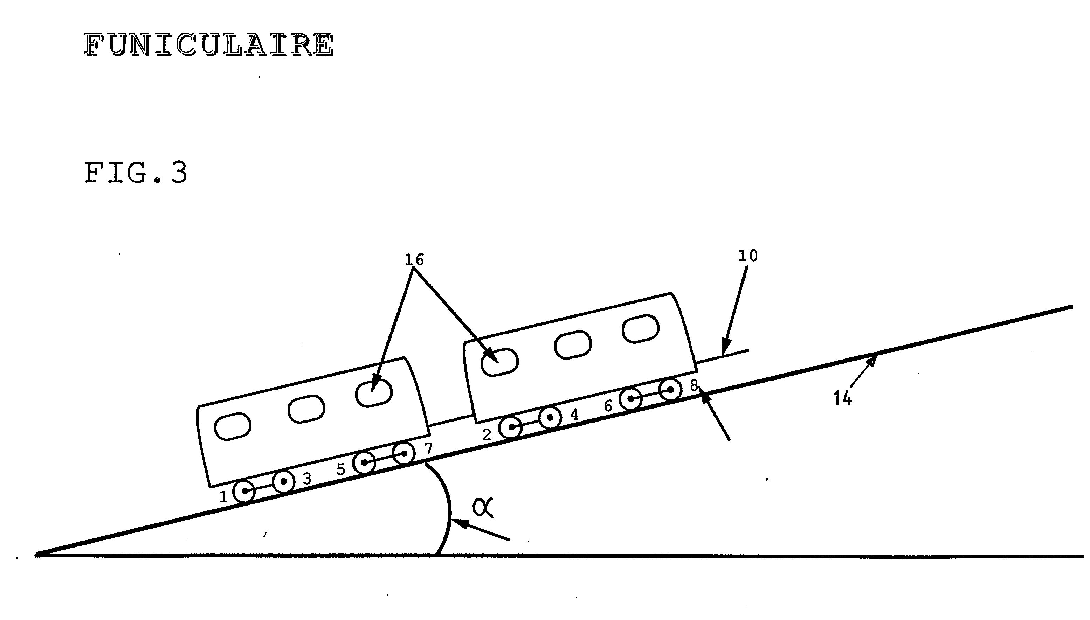

Le système de commande selon l'invention facilite la sélection des freins et leur ordre de commande. Sur la figure 3 est représenté un train de deux véhicules ayant chacun deux boggies. A chaque essieu de boggies est associé un frein ou une paire de freins de secours et l'ordre d'actionnement de ces freins est indiqué sur la figure par les chiffres 1 à 8. Le premier frein sélectionné (1) est celui de l'essieu le plus en aval, le deuxième (2) l'essieu le plus en aval du véhicule amont, etc...

L'automate peut surveiller l'usure des freins de secours en comptant, par exemple dans un système simplifié, le nombre d'interventions de chaque frein, et permuter l'ordre de sélection pour répartir cette usure. Cet ordre de sélection est modifiable pour éviter tout freinage sur certains tronçons de la voie, par exemple dans les zone d'aiguillages ou de courbes.

L'invention n'est bien entendu pas limitée au mode de mise en oeuvre plus particulièrement décrit, mais elle s'étend à toute variante, notamment à celle dans laquelle la structure des freins et/ou leur mode de commande seraient différents, ou encore à celle où la commande de déclenchement est intégrée à l'automate lequel pilote à la fois et/ou simultanément la présélection et le déclenchement.

## Revendications

1. Dispositif de freinage de secours embarqué sur un véhicule (16), notamment d'un funiculaire, comprenant un détecteur d'incident (50), notamment de rupture de câble, de survitesse et d'anti-retour, pour déclencher le freinage de secours du véhicule et une pluralité de freins (18) sollicités en position de freinage et maintenus en position armée, prêts au freinage, par des accrochages (26) commandés individuellement pour permettre une modulation du freinage en cas d'incident par une commande sélective du nombre de freins (18) mis en action, caractérisé en ce que les commandes (36, 38; 44, 46) des accrochages des freins sont pilotées d'une part par ledit détecteur d'incident (50) et d'autre part par un automate (52, 54), recevant un signal de position (56, 58), représentatif de la position du véhicule (16) sur la pente de la voie (14) et émettant un signal de sélection, lors d'un incident, d'un nombre de freins (18) déterminé par la position du véhicule au moment de l'incident pour adapter la décélération aux conditions du moment et éviter des décélérations excessives du véhicule.

2. Dispositif de freinage selon la revendication 1, caractérisé en ce que ledit automate (52, 54) comporte une mémoire dans laquelle sont stockées les caractéristiques de freinage tenant compte de la pente de la voie, en fonction de la position du véhicule sur la voie et que l'automate interroge la mémoire pour prélever les caractéristiques correspondant à la position du véhicule au moment de l'incident, laquelle position est fournie par le signal de position reçu par l'automate, et pour sélectionner le nombre de freins (18) approprié.

3. Dispositif de freinage selon la revendication 1 ou 2, caractérisé en ce que chaque véhicule (16) comporte deux automates (52, 54) et deux générateurs (56, 58) de signaux de position pour sélectionner séparément en toute sécurité lesdits freins (18).

4. Dispositif de freinage selon la revendication 1, 2 ou 3, caractérisé en ce qu'il comporte un détecteur de charge (60, 62) du véhicule (16) qui fournit à l'automate (52, 54) un signal représentatif de la charge du véhicule, et que ledit automate intègre dans le calcul ou la détermination du nombre de freins (18) à actionner la masse du véhicule.

5. Dispositif de freinage selon la revendication 1, 2, 3 ou 4, caractérisé en ce qu'il comporte une commande instantanée d'un nombre minimal de freins, pilotée directement par ledit détecteur d'incident (50) et que ledit automate (52, 54) sélectionne le nombre de freins complémentaires.

6. Dispositif de freinage selon l'une quelconque des revendications précédentes, caractérisé en ce que lesdits freins (18) comportent des pinces (20) agissant sur les rails (22) de la voie (14) sous l'action de ressorts (24), en particulier d'empilages de rondelles élastiques et que lesdits freins sont maintenus en position desserrée par des accrochages (26) électriques ou hydrauliques commandés par ledit automate (52, 54).

7. Dispositif de freinage selon l'une quelconque des revendications précédentes, caractérisé en ce que le véhicule comporte un générateur d'impulsions (56, 58) entraîné par le déplacement du véhicule (16) et fournissant audit automate (52, 54) le signal de position du véhicule.

8. Dispositif de freinage selon l'une quelconque des revendications précédentes, caractérisé en ce qu'il comporte un dispositif de mesure de la décélération du véhicule (16) relié audit automate (52, 54) lequel compare à chaque instant la décélération à des seuils prédéterminés pour actionner un nombre additionnel de freins et déclencher un freinage complémentaire.

9. Dispositif de freinage selon la revendication 8, caractérisé en ce que lesdits seuils sont fonction de la position du véhicule et sont enregistrés dans une mémoire de l'automate (52, 54) qui lit la valeur de seuil appropriée à chaque position du véhicule.

10. Dispositif de freinage selon l'une quelconque des revendications précédentes, caractérisé en ce que ledit automate (52, 54) présélectionne les freins (18) à actionner en fonction de l'usure et/ou de la position du frein sur la voie ou sur le véhicule.

fig 1

EP 0 392 938 A1

FIG.2

FUNICULAIRE

FUNICULAIRE

FIG.3

EP 0 392 938 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | VERKEHR, no. 29, 20 juillet 1982, page 16; GRÖTZINGER: "Sicherheit bei Kabinenbahnen" * En entier * | 1,2,5,8 | B 61 B  12/06 B 61 H   9/02 |
| A | IDEM --- | 3 | |
| Y | FR-A-2 446 749  (CHARBONNAGES DE FRANCE) * Revendications * --- | 1 | |
| Y | FR-A-2 268 675  (POHLIG et al.) * Revendications * --- | 1 | |
| A | DE-B-1 252 228  (POHLIG et al.) * En entier * --- | 1 | |
| A | FR-A-2 334 548  (POHLIG et al.) * Revendications * --- | 1 | |
| A | FR-A-2 251 463  (HABEGGER) * Revendications 1,2 * ----- | 1,5 | DOMAINES TECHNIQUES RECHERCHES (Int. Cl.5) B 61 B B 61 H |

Le présent rapport a été établi pour toutes les revendications

| Lieu de la recherche | Date d'achèvement de la recherche | Examinateur |
|---|---|---|
| LA HAYE | 21-06-1990 | SCHMAL R. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
..............................................................
& : membre de la même famille, document correspondant

EPO FORM 1503 03.82 (P0402)